# EUROPEAN PATENT SPECIFICATION

(11) **EP 3 830 619 B1**
(45) Date of publication and mention of the grant of the patent: **15.01.2025**
(21) Application number: 19844958.9
(22) Date of filing: 05.08.2019
(51) Int. Cl.: G02B 6/38, G02B 6/36, G02B 6/24

(54) **FIBER OPTICAL CONNECTOR WITH RETENTION FEATURE**
GLASFASERSTECKER MIT HALTEELEMENT
CONNECTEUR DE FIBRE OPTIQUE AVEC ÉLÉMENT DE RETENUE

(30) Priority: 03.08.2018 US 201862714123 P
(43) Date of publication of application: 09.06.2021
(73) Proprietor: PPC Broadband, Inc., East Syracuse, NY 13057 (US)
(72) Inventor: CRAWFORD, William, Syracuse, NY 13208 (US); MONTENA, Noah, P., Syracuse, NY 13210 (US)
(74) Representative: PGA S.p.A., Milano, Succursale di Lugano
(86) International application number: PCT/US2019/045184
(87) International publication number: WO 2020/028920

(56) References cited:
- EP-A1- 3 141 940
- GB-A- 2 468 442
- US-A1- 2018 031 782
- US-A1- 2018 217 335
- US-B2- 7 568 844

## Description

### TECHNICAL FIELD

The present disclosure is directed to a fiber optical connector with a retention feature and, more particularly, to a hardened fiber optical connector that allows for easy field assembly. The hardened fiber optical connector has an inner housing that directly attaches a preterminated optical fiber cable to a ferrule without the use of an outer clamp shell.

### BACKGROUND

Fiber optical communication systems typically use a network of fiber optic cables to transmit large volumes of data. Typical fiber optical connectors include a ferrule that supports an end portion of an optical fiber. When two fiber optical connectors are interconnected, end faces of the ferrules, on each connector, directly oppose one another. Thus, the optical fibers, which are supported by each ferrule, are also directly opposed to each other. Furthermore, springs in each connector bias the optical fibers towards each other when the connectors are in this interconnected state. An optical signal can then be transmitted from one optical fiber to the other optical fiber.

Traditionally, the ferrule is disposed in a ferrule holder carrier, which is then secured to an outer barrel. Conventional outer barrels include a clamp shell arrangement in order to easily fit the barrel around and over the ferrule holder carrier and the cable. Thus, the clamp shell may open in order to move the barrel over and around these components. An outer housing may then be disposed over the clamp shell in order to provide a secure andstable connector assembly.

<Document GB2468442A discloses a method of installing a Subscriber Connection (SC) -type push/pull optical fiber connector having a ferrule onto an optical fiber.

Document US7568844B2 discloses a ruggedized fiber optic connector assembly including a substantially hollow plug housing.

Document US2018217335A1 discloses an optical fiber connector including a gimbal. The optical fiber connector further includes a retention body having a pair of snap hooks configured to engage a pair of recesses of the connector sub-assembly.>

It may be desirable to provide a hardened optical fiber connector that overcomes one or more problems of conventional prior art connectors that are recognized by persons having ordinary skill in the art.

### SUMMARY

A fiber optical connector according to the invention is disclosed in any one of appended claims 1-8.

The present disclosure is directed to a fiber optical connector that can be easily assembled in the field. The fiber optical connector includes a barrel, one or more latches, and a ferrule housing sub-assembly. The barrel includes an inner lumen that is configured to receive an optical fiber cable, and the barrel has a first end and a second end. The one or more latches extend from the first end of the barrel. Additionally, the ferrule housing sub-assembly includes a ferrule holder carrier that is configured to receive a ferrule. The latches engage with the ferrule holder carrier in order to secure the barrel with the ferrule housing sub-assembly.

### BRIEF DESCRIPTION OF THE DRAWINGS

Features and advantages of the present disclosure are described in, and will be apparent from, the following Brief Description of the Drawings and Detailed Description.
FIG. 1 is an exploded perspective view of an exemplary connector in accordance with various aspects of the disclosure;
FIG. 2 is a perspective view of the inner housing and preconnectorized cable of the exemplary connector of FIG. 1;
FIG. 3 is a side cross-sectional view of the inner housing and preconnectorized cable of the exemplary connector of FIG. 1;
FIG. 4 is a perspective view of the inner housing and boot of the exemplary connector of FIG. 1;
FIG. 5 is a perspective view of the inner housing of the exemplary connector of FIG. 1;
FIG. 6 is a side cross-sectional view of the exemplary connector of FIG. 1;
FIG. 7 is a side cross-sectional view of another exemplary connector in accordance with various aspects of the disclosure;
FIG. 8 is a partially-exploded perspective view of another exemplary connector in accordance with various aspects of the disclosure;
FIG. 9 is a side cross-sectional view of the exemplary connector of FIG. 8;
FIG. 10 is a perspective view of the inner housing of the exemplary connector of FIG. 8.

### DETAILED DESCRIPTION OF EMBODIMENTS

Throughout the description, like reference numerals will refer to like parts in the various drawing figures. As a preface to the detailed description, it should be noted that, as used in this specification and the appended claims, the singular forms "a", "an" and "the" include plural referents, unless the context clearly dictates otherwise.

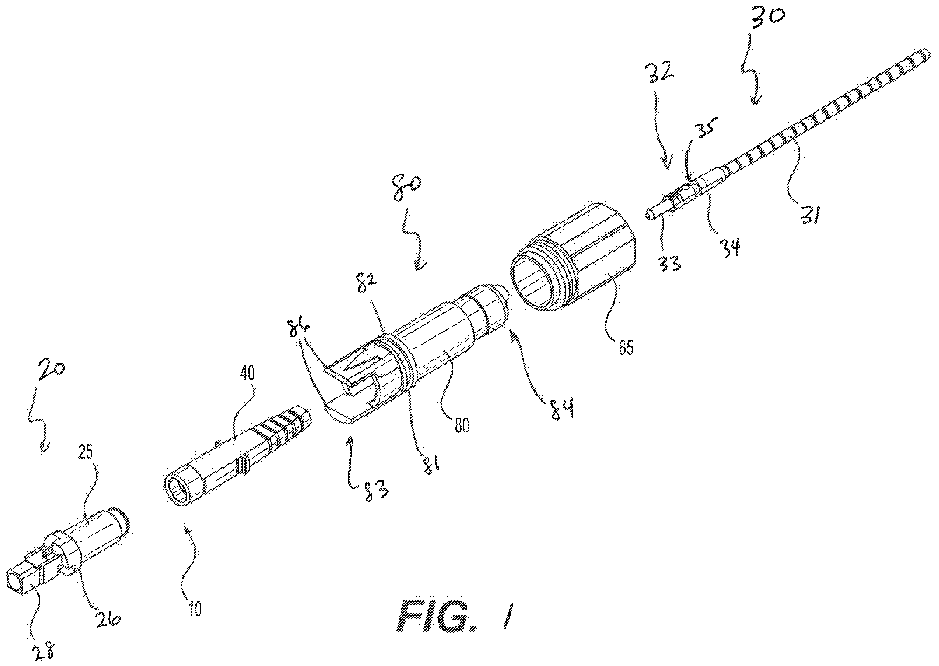

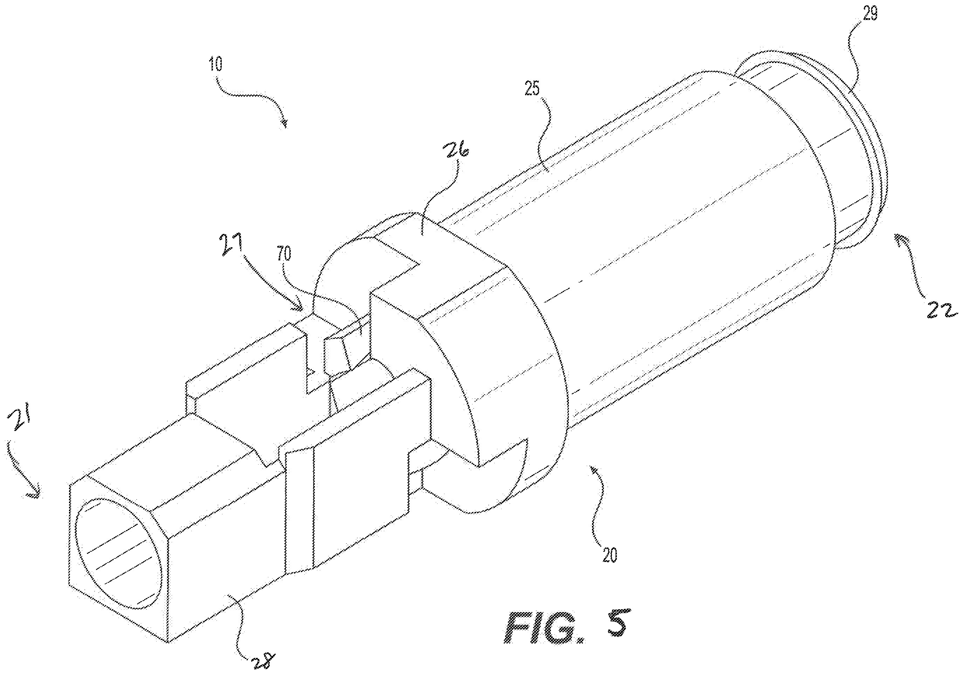

FIGS. 1-6 illustrate an exemplary hardened fiber optical connector 10 in accordance with various aspects of the disclosure. As shown in FIG. 1, the connector 10 includes an inner housing 20, a preterminated fiber optic cable 30, a boot 40, a shroud 80, and a coupling nut 85. The preterminated fiber optic cable 30 may be, for example, a Miniflex^{®} QuikPush^{®} fiber cable, as illustrated and described in U.S. Patent No. 8,439,577.

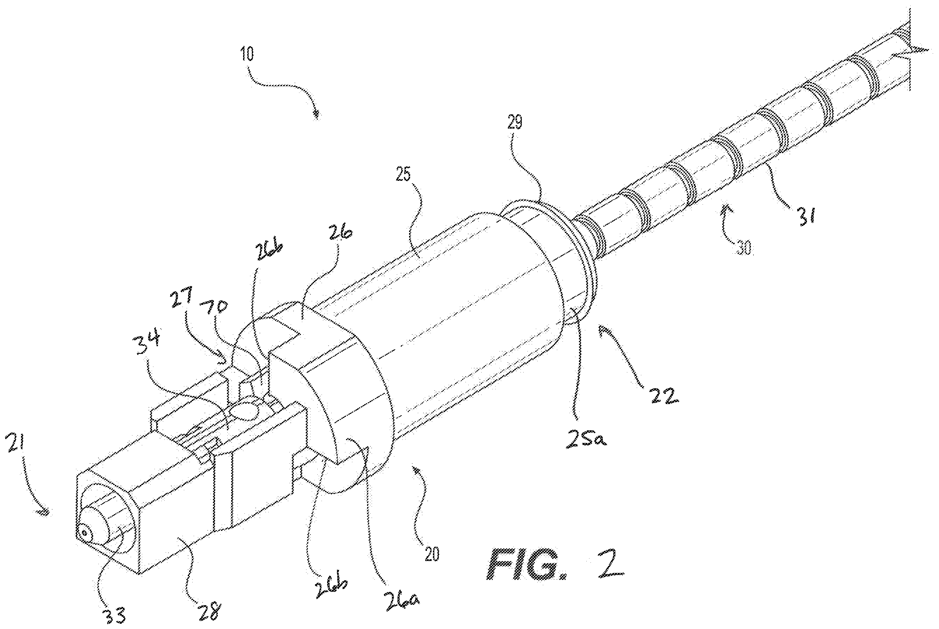

As illustrated in FIG. 2, the inner housing 20 extends from a first end 21 to a second end 22 along a longitudinal axis X and includes a barrel portion 25, a mid-section 26, a latching portion 27, and a connector shell portion 28. The connector shell portion 28 is at the first end 21 of the inner housing 20, the barrel portion 25 is at the second end 22 of the inner housing 20, and the mid-section 26 and latching portion 27 are between the connector shell portion 28 and the barrel portion 25 in the longitudinal direction.

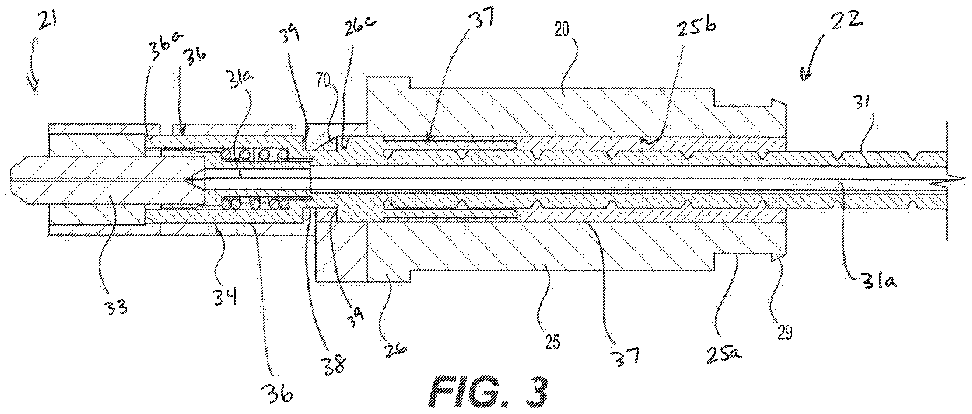

As illustrated in FIG. 3, the barrel portion 25 includes a reduced diameter portion 25a and one or more barbs 29 configured to couple with the boot 40. The barrel portion 25 includes a throughbore 25b extending in the longitudinal direction. The throughbore 25b is configured to receive the preterminated fiber optic cable 30 and allow the preterminated cable 30 to pass therethrough into the connector shell portion 28. As shown in Figs. 1 and 3, the barb 29 may include a ridge that projects radially outward from the second end 22 of inner housing 20. In some embodiments, one barb 29 may be provided on barrel portion 25. In other embodiments, two or more barbs 29 may be provided on barrel portion 25. It is also contemplated that the barb 29 may include any other well-known method to secure boot 40 with the barrel portion 25. As shown in Fig. 2, boot 40 may be disposed over and around the barb 29. The boot 40 may be a flexible member that allows an interface between connector 10 and optical fiber cable 30 to bend and rotate. For example, the boot 40 may be formed from a flexible material such as KRAYTON.

The preterminated fiber optic cable 30 includes a fiber optic cable 31 preterminated by a fiber connector 32, which includes a ferrule 33, and a ferrule holder 34, as would be understood by persons of ordinary skill in the art. The optical fiber cable 31 holds a single strand of 125µm diameter single mode optical fiber 31a, which may be protected by buffering layers and an outer sheath. The optical fiber 31a is held in a bore of the ferrule 33, as would be understood by persons skilled in the art. The fiber connector 32 may be, for example, a PPC^{®} Balistix (QuikPush^{®}) connector. The ferrule holder 34 includes a neck portion 35 formed by an annular groove 38 between a first end portion 36 and a second end portion 37 of the ferrule holder 34. The ferrule 33 extends from the first end portion 36 of the ferrule holder 34. The inner housing 20 is configured to be coupled with the fiber connector 32, as will be described in more detail below.

As best shown in FIGS. 2, 4, and 5, the mid-section 26 includes a portion 26a having an enlarged dimension in the longitudinal direction and having radially-extending flats 26b. The enlarged portion 26a and the flats 26b are configured to align the inner housing 20 with the shroud 80, as would be understood by persons of ordinary skill in the art. The mid-section 26 includes a throughbore 26b that continues from the throughbore 25b of the barrel portion 25 with a substantially same inside diameter.

The connector shell portion 28 is configured to be received by a mating optical fiber receptacle or socket. The connector shell portion 28 may be configured to be received by a receptacle that is configured to receive a connector having convenient push/pull style mating that allows for push/pull engagement/disengagement between the connector 10 and the mating optical fiber socket. For example, in some aspects, the receptacle may be configured to receive a "Subscriber Connector," or SC connector, as originally developed by NTT^{®}, which is well-known by persons having ordinary skill in the art.

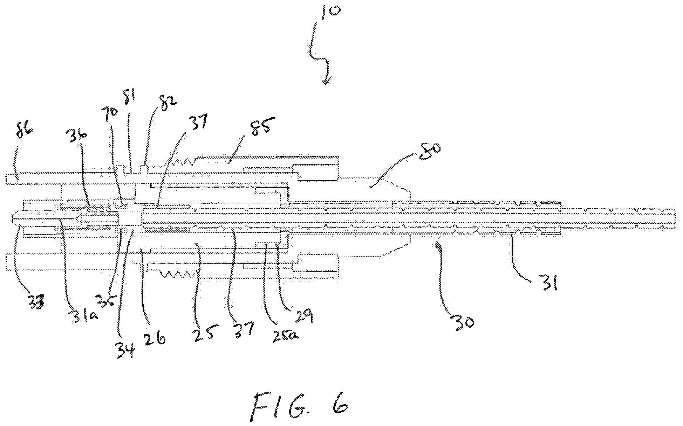

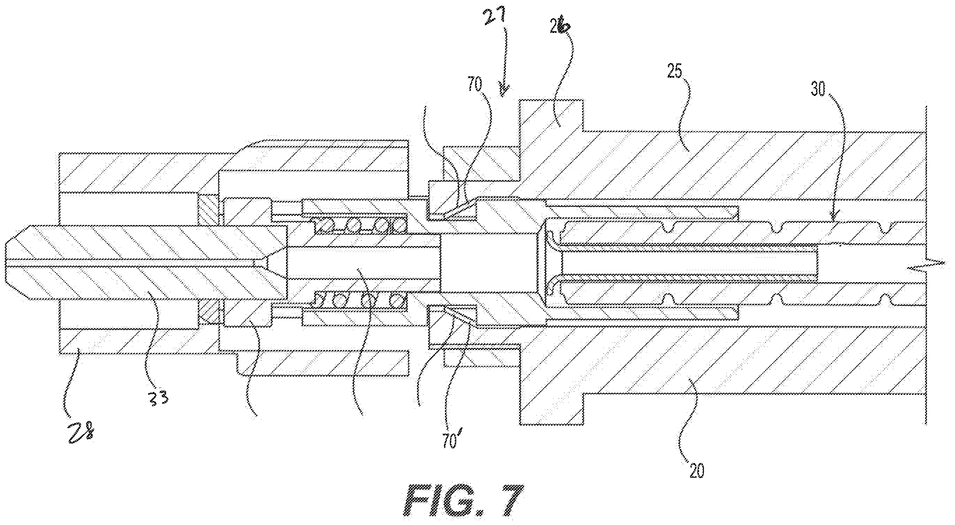

As best illustrated in FIGS. 2-4, the latching portion 27 may be disposed at the mid-section 26 of the inner housing 20. The latching portion 27 includes one or more latches 70 that extend radially inward into the throughbore 26c of the mid-section 26 of the inner housing 20. As shown in FIGS. 3 and 6, the latch 70 is configured to extend into the annular groove forming the neck portion 35 of the ferrule holder 34. Although FIGS. 2-4 illustrate a single latch 70, the latching portion may include two latches 70, 70' equidistantly arranged around a circumference of the mid-section 26, as shown in FIG. 7. Alternatively, the latching portion 27 may include three or more latches. For example, the latching portion 27 may include four latches disposed equidistantly around the circumference of mid-section 26. It is further contemplated that latches may be disposed irregularly around the circumference of mid-section 26.

The latch 70 is configured as a cantilevered member attached at a first end to the mid-section and having a second free end. The latch 70 is configured to move radially outward upon application of an outward force and is configured to return to its position extending into the throughbore 26c of the mid-section 26 upon removal of the outward force. As a result of this configuration, the latch 70 is configured to provide a snap-fit and/or an interference fit with optical fiber connector sub-assembly 32. For example, the latch 70 is configured to be received by the neck portion 35 of the ferrule holder 34 when the preterminated cable 30 is received by the inner housing 20.

The shroud 80 has a first end 83 and a second end 84. The first end 83 of the shroud 80 includes at least one opening (not numbered) defined by shroud 80. The at least one opening extends from a medial portion of the shroud 80 to the first end 83. In the illustrated embodiment, the shroud 80 includes a pair of openings on opposite sides of the first end 83, thereby defining alignment portions or fingers 86. In some aspects, the alignment fingers 86 may have different shapes so that the connector 10 and receptacle (not shown) only mate in one orientation. The medial portion of the shroud 80 may include a groove 81 for seating an O-ring (not shown). The O-ring is configured to provide a weatherproof seal between the connector 10 and the receptacle (not shown) or protective cap (not shown) that is configured to cover a front end of the shroud 80 and the ferrule 33. The medial portion may also include a shoulder 82 that provides a stop for the coupling nut 85. The coupling nut 85 has a passageway sized so that it fits over the second end 84 of the shroud 80 and easily rotates about the medial portion of shroud 80. In other words, the coupling nut 85 cannot move beyond the shoulder 82, but the coupling nut 85 is able to rotate with respect to shroud 80.

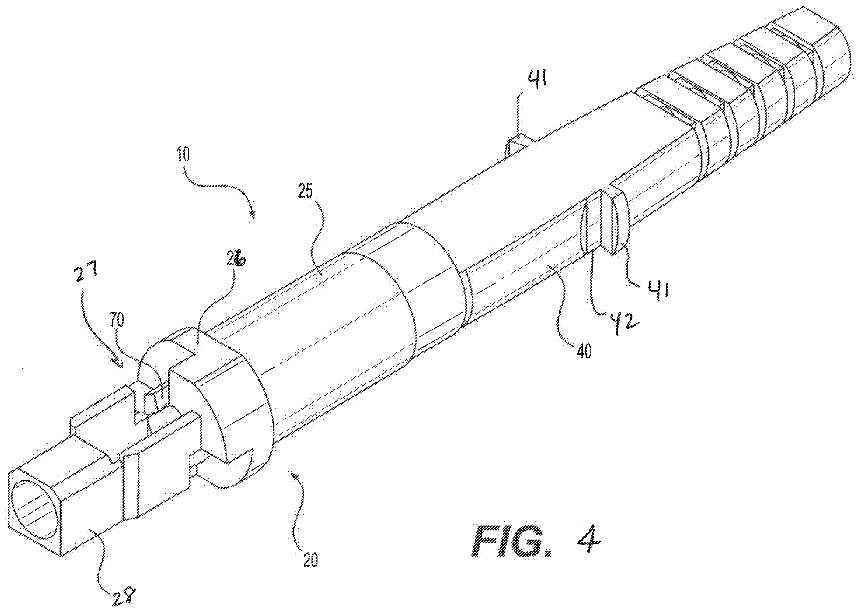

To assemble the connector 10, the coupling nut 85, the shroud 80, and the boot 40 are moved over the preconnectorized cable 30. Viewed differently, the preconnectorized cable 30 is pushed through the coupling nut 85, the shroud 80, and the boot 40 such that coupling nut 85 is furthest from the ferrule 33 and the boot 40 is nearest the ferrule 33. The preconnectorized cable 30 is then pushed into the inner housing 20 until the first end portion 36 of the ferrule holder 34 reaches the latching portion 27. The first end portion 36 of the ferrule holder 34 includes a ramped surface 36a that is configured to urge the latch 70 radially outward as the preconnectorized cable 30 is further pushed toward the first end 21 of the inner housing 20. When the annular groove 38 at the neck portion 35 of the ferrule holder 34 reaches the latch 70, the latch returns to its position extending into the throughbore 26c of the mid-section 26 in the absence of the force from the first end portion 36 of the ferrule holder 34. The radial surfaces 39 that define the groove 38 are not configured to urge the latch 70 radially outward, but instead are configured to prevent movement of the ferrule holder 34 relative to the inner housing 20 in the longitudinal direction. The boot 40 is then pushed over the barb 29 and onto the reduced diameter portion 25a at the second end 22 of the barrel portion 25 of the inner housing 20 to the position shown in FIGS. 3 and 4. Next, the shroud 80 and coupling nut 85 are pushed over the boot 40 and inner housing 20 to reach their positions shown in FIG. 6. In some aspects, the boot 40 may include one or more retention members 41 that extend from an outer surface 42 of the boot and are configured to be compressed onto the outer surface 42 of the boot 40 by the shroud 80 as the shroud is moved over the boot 40 and inner housing 20. The shroud 80 and coupling nut 85 may be pushed together or separately.

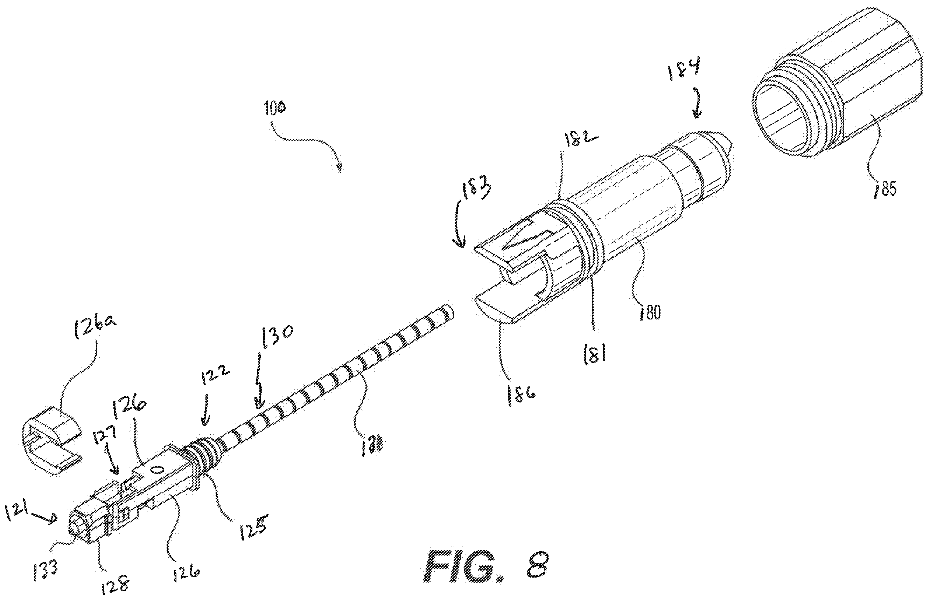

FIGS. 8-10 illustrate another exemplary hardened fiber optical connector 100 in accordance with various aspects of the disclosure. As shown in FIG. 1, the connector 100 includes an inner housing 120, a preterminated fiber optic cable 130, a shroud 180, and a coupling nut 185. The preterminated fiber optic cable 30 may be, for example, a Miniflex^{®} QuikPush^{®} fiber cable, as illustrated and described in U.S. Patent No. 8,439,577.

As illustrated in FIG. 2, the inner housing 120 extends from a first end 121 to a second end 122 along a longitudinal axis X and includes a rear portion 125, a mid-section 126, a latching portion 127, and a connector shell portion 128. The connector shell portion 128 is at the first end 121 of the inner housing 120, the rear portion 125 is at the second end 122 of the inner housing 120, and the mid-section 126 and latching portion 127 are between the connector shell portion 128 and the rear portion 125 in the longitudinal direction.

As illustrated in FIG. 3, the rear portion 125 includes a reduced diameter portion 125a having one or more barbs 129 configured to couple with a retention structure 187 of the shroud 180. The rear portion 125 includes a throughbore 125b extending in the longitudinal direction. The throughbore 125b is configured to receive the preterminated fiber optic cable 130 and allow the preterminated cable 130 to pass therethrough into the connector shell portion 128.

The preterminated fiber optic cable 130 includes a fiber optic cable 131 preterminated by a fiber connector 132, which includes a ferrule 133, and a ferrule holder 134, as would be understood by persons of ordinary skill in the art. The optical fiber cable 131 holds a single strand of 125µm diameter single mode optical fiber (not shown), which may be protected by buffering layers and an outer sheath. The optical fiber (not shown) is held in a bore of the ferrule 133, as would be understood by persons skilled in the art. The fiber connector 132 may be, for example, a PPC^{®} Balistix (QuikPush^{®}) connector. The ferrule holder 134 includes a neck portion 135 formed by an annular groove 138 between a first end portion 136 and a second end portion 137 of the ferrule holder 134. The ferrule 133 extends from the first end portion 136 of the ferrule holder 134. The inner housing 120 is configured to be coupled with the fiber connector 132, as will be described in more detail below.

A clip 126a may be removably coupled with the mid-section 126. The removable clip 126a has an enlarged radial dimension relative to the mid-section 126 and includes transversely-extending flats 126b. The removable clip 126a and the flats 126b are configured to align the inner housing 120 with the shroud 180, as would be understood by persons of ordinary skill in the art. The mid-section 126 includes a throughbore 126b that continues from the throughbore 125b of the rear portion 125 with a substantially same inside diameter.

The connector shell portion 128 is configured to be received by a mating optical fiber receptacle or socket. The connector shell portion 128 may be configured to be received by a receptacle that is configured to receive a connector having convenient push/pull style mating that allows for push/pull engagement/disengagement between the connector 100 and the mating optical fiber socket. For example, in some aspects, the receptacle may be configured to receive a "Subscriber Connector," or SC connector, as originally developed by NTT^{®}, which is well-known by persons having ordinary skill in the art.

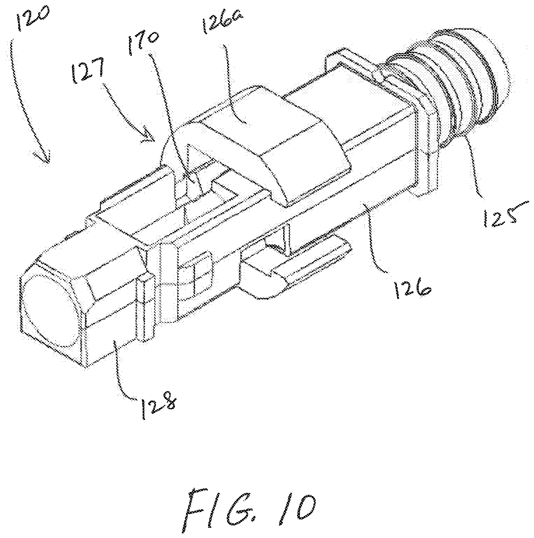

As best illustrated in FIG. 10, the latching portion 127 may be disposed at the mid-section 126 of the inner housing 120. The latching portion 127 includes one or more latches 170 that extend radially inward into the throughbore 126b of the mid-section 126 of the inner housing 120. The latch 170 is configured to extend into the annular groove forming the neck portion 135 of the ferrule holder 134. Although FIGS. 8-10 illustrate a single latch 170, the latching portion 127 may include two or more latches, as described above.

The latch 170 is configured as a cantilevered member attached at a first end to the mid-section and having a second free end. The latch 170 is configured to move radially outward upon application of an outward force and is configured to return to its position extending into the throughbore 126b of the mid-section 126 upon removal of the outward force. As a result of this configuration, the latch 170 is configured to provide a snap-fit and/or an interference fit with optical fiber connector sub-assembly 132. For example, the latch 170 is configured to be received by the neck portion 135 of the ferrule holder 134 when the preterminated cable 130 is received by the inner housing 120.

The shroud 180 has a first end 183 and a second end 184. The first end 183 of the shroud 180 includes at least one opening (not numbered) defined by shroud 180. The at least one opening extends from a medial portion of the shroud 180 to the first end 183. In the illustrated embodiment, the shroud 180 includes a pair of openings on opposite sides of the first end 183, thereby defining alignment portions or fingers 186. In some aspects, the alignment fingers 186 may have different shapes so that the connector 100 and receptacle (not shown) only mate in one orientation. The medial portion of the shroud 180 may include a groove 181 for seating an O-ring (not shown). The O-ring is configured to provide a weatherproof seal between the connector 100 and the receptacle (not shown) or protective cap (not shown) that is configured to cover a front end of the shroud 180 and the ferrule 133. The medial portion may also include a shoulder 182 that provides a stop for the coupling nut 185. The coupling nut 185 has a passageway sized so that it fits over the second end 184 of the shroud 180 and easily rotates about the medial portion of shroud 180. In other words, the coupling nut 185 cannot move beyond the shoulder 182, but the coupling nut 185 is able to rotate with respect to shroud 180.

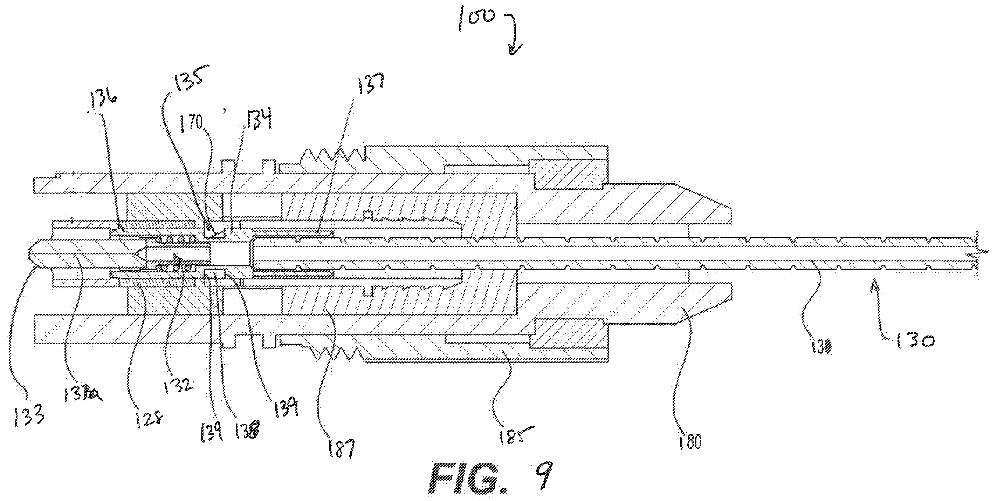

To assemble the connector 100, the coupling nut 185 and the shroud 180 are moved over the preconnectorized cable 130. Viewed differently, the preconnectorized cable 130 is pushed through the coupling nut 185 and the shroud 80 such that the coupling nut 185 is further from the ferrule 133. The preconnectorized cable 130 is then pushed into the inner housing 120 until the first end portion 136 of the ferrule holder 134 reaches the latching portion 127. The first end portion 136 of the ferrule holder 134 includes a ramped surface 136a that is configured to urge the latch 170 radially outward as the preconnectorized cable 130 is further pushed toward the first end 121 of the inner housing 120. When the annular groove 138 at the neck portion 135 of the ferrule holder 134 reaches the latch 170, the latch returns to its position extending into the throughbore 126b of the mid-section 126 in the absence of the force from the first end portion 136 of the ferrule holder 134. The radial surfaces 139 that define the groove 138 are not configured to urge the latch 170 radially outward, but instead are configured to prevent movement of the ferrule holder 134 relative to the inner housing 120 in the longitudinal direction. The shroud is then pushed over the barbs 29 at the second end 22 of the rear portion 25 and over the inner housing 20 to the position shown in FIG. 9. Next, the coupling nut 85 is pushed over the shroud 80 to reach its position shown in FIG. 9. The shroud 80 and coupling nut 85 may be pushed together or separately.

The foregoing description of exemplary embodiments provides illustration and description, but is not intended to be exhaustive or to limit the embodiments described herein to the precise form disclosed. Modifications and variations are possible in light of the above teachings or may be acquired from practice of the embodiments.

Although the invention has been described in detail above, it is expressly understood that it will be apparent to persons skilled in the relevant art that the invention may be modified without departing from the scope of the invention. Various changes of form, design, or arrangement may be made to the invention without departing from the scope of the invention. Therefore, the above mentioned description is to be considered exemplary, rather than limiting, and the scope of the invention is that defined in the following claims.

No element, act, or instruction used in the description of the present application should be construed as critical or essential to the invention unless explicitly described as such. Also, as used herein, the article "a" is intended to include one or more items. Where only one item is intended, the term "one" or similar language is used. Further, the phrase "based on" is intended to mean "based, at least in part, on" unless explicitly stated otherwise.

## Claims

1. A fiber optical connector (10; 100) comprising:
a barrel portion (25) that includes an inner lumen configured to receive an optical fiber cable (30), the barrel portion (25) having a first end and a second end,
wherein the second end of the barrel portion (25) includes a barb (29) that projects outward from the second end of the barrel portion (25);
a boot (40), wherein the barb (29) of the barrel portion (25) is configured for attachment to the boot (40);
one or more latches (27) extending from the first end of the barrel portion (25); and
a ferrule housing sub-assembly that includes a ferrule holder (34) that is configured to receive a ferrule (33), wherein the latches (27) engage with the ferrule holder (34) in order to secure the barrel portion (25) with the ferrule housing sub-assembly;
a coupling nut (85); and
a shroud (80) having a first end (83) and a second end (84), wherein the first end (83) of the shroud (80) includes at least one opening defined by the shroud (80) and extending from a medial portion of the shroud (80) to the first end (83),
wherein the medial portion of the shroud (80) includes a shoulder (82) that provides a stop for the coupling nut (85),
and wherein the coupling nut (85) has a passageway sized so that it fits over the second end (84) of the shroud (80) and rotates about the medial portion of shroud (80), wherein the coupling nut (85) cannot move beyond the shoulder (82), but the coupling nut (85) is able to rotate with respect to shroud (80).

2. The fiber optical connector according to claim 1, wherein the barrel portion (25) includes a reduced diameter portion (25a).

3. The fiber optical connector according to claim 1 or 2, wherein boot (40) is disposed over and around the barb, in particular wherein the boot (40) is a flexible member that allows an interface between the fiber optical connector and an optical fiber cable (30) to bend and rotate.

4. The fiber optical connector according to any one of the preceding claims, comprising an inner housing (20) extending from a first end (21) to a second end (22) along a longitudinal axis X and including the barrel portion (25), a mid-section (26), a latching portion (27), and a connector shell portion (28), and wherein the connector shell portion (28) is at the first end (21) of the inner housing (20), the barrel portion (25) is at the second end (22) of the inner housing (20), and the mid-section (26) and latching portion (27) are between the connector shell portion (28) and the barrel portion (25) in the longitudinal direction.

5. The fiber optical connector of claim 4, wherein the latching portion (27), optionally disposed at the mid-section (26) of the inner housing (20), includes the one or more latches (70) that extend radially inward into throughbore (26c) of the mid-section (26) of the inner housing (20),
wherein the one or more latches (70) are configured to extend into an annular groove forming neck portion (35) of ferrule holder (34); and
wherein the one or more latches (70) are configured as a cantilevered member attached at a first end to the mid-section (26) and having a second free end, to move radially outward upon application of an outward force and to return to their position extending into the throughbore (26c) of the mid-section (26) upon removal of the outward force.

6. The fiber optical connector according to claim 1, wherein the latches are biased inward toward a center axis of the barrel; or wherein the latches provide a snap-fit and/or an interference fit with the ferrule housing sub-assembly.

7. The fiber optical connector of any one of the preceding claims, wherein the shroud (80) includes a pair of openings on opposite sides of the first end (83), thereby defining alignment portions or fingers (86).

8. The fiber optical connector of any one of the preceding claims, wherein the medial portion of the shroud (80) includes a groove (81) seating an O-ring.

## Patentansprüche

1. Optischer Faser-Konnektor (10; 100), umfassend:
einen Zylinderabschnitt (25), welcher ein inneres Lumen umfasst, welches dazu eingerichtet ist, ein optisches Faserkabel (30) aufzunehmen, wobei der Zylinderabschnitt (25) ein erstes Ende und ein zweites Ende aufweist,
wobei das zweite Ende des Zylinderabschnitts (25) einen Widerhaken (29) umfasst, welcher von dem zweiten Ende des Zylinderabschnitts (25) nach außen vorsteht;
eine Tülle (40), wobei der Widerhaken (29) des Zylinderabschnitts (25) für ein Anbringen an der Tülle (40) eingerichtet ist;
eine oder mehrere Klinken (27), welche sich von dem ersten Ende des Zylinderabschnitts (25) erstrecken; und
eine Hülsengehäuse-Subanordnung, welche einen Hülsenhalter (34) umfasst, welcher dazu eingerichtet ist, eine Hülse (33) aufzunehmen, wobei die Klinken (27) mit dem Hülsenhalter (34) eingreifen, um den Zylinderabschnitt (25) mit der Hülsengehäuse-Subanordnung zu sichern;
eine Kopplungsmutter (85); und
eine Ummantelung (80), welche ein erstes Ende (83) und ein zweites Ende (84) aufweist, wobei das erste Ende (83) der Ummantelung (80) wenigstens eine Öffnung umfasst, welche durch die Ummantelung (80) definiert ist und sich von einem mittleren Abschnitt der Ummantelung (80) zu dem ersten Ende (83) erstreckt,
wobei der mittlere Abschnitt der Ummantelung (80) eine Schulter (82) umfasst, welche einen Anschlag für die Kopplungsmutter (85) bereitstellt,
und wobei die Kopplungsmutter (85) einen Durchgang aufweist, welcher derart bemessen ist, dass sie über das zweite Ende (84) der Ummantelung (80) passt und um den mittleren Abschnitt der Ummantelung (80) dreht, wobei sich die Kopplungsmutter (85) nicht über die Schulter (82) hinaus bewegen kann, jedoch die Kopplungsmutter (85) dazu in der Lage ist, sich in Bezug auf die Ummantelung (80) zu drehen.

2. Optischer Faser-Konnektor nach Anspruch 1, wobei der Zylinderabschnitt (25) einen Abschnitt (25a) mit reduziertem Durchmesser umfasst.

3. Optischer Faser-Konnektor nach Anspruch 1 oder 2, wobei die Tülle (40) über dem Widerhaken (29) und um diesen herum angeordnet ist, insbesondere wobei die Tülle (40) ein flexibles Element ist, welches einer Schnittstelle zwischen dem optischen Faser-Konnektor und einem optischen Faserkabel (30) erlaubt, sich zu biegen und zu drehen.

4. Optischer Faser-Konnektor nach einem der vorhergehenden Ansprüche, umfassend ein inneres Gehäuse (20), welches sich von einem ersten Ende (21) zu einem zweiten Ende (22) entlang einer longitudinalen Achse X erstreckt und den Zylinderabschnitt (25), einen mittleren Abschnitt (26), einen Klinkenabschnitt (27) und einen Konnektor-Hüllenabschitt (28) umfasst, und wobei der Konnektor-Hüllenabschnitt (28) an dem ersten Ende (21) des inneren Gehäuses (20) ist, der Zylinderabschnitt (25) an dem zweiten Ende (22) des inneren Gehäuses (20) ist und der mittlere Abschnitt (26) und der Klinkenabschnitt (27) zwischen dem Konnektor-Hüllenabschnitt (28) und dem Zylinderabschnitt (25) in der longitudinalen Richtung sind.

5. Optischer Faser-Konnektor nach Anspruch 4, wobei der Klinkenabschnitt (27), optional an dem mittleren Abschnitt (26) des inneren Gehäuses (20) angeordnet, die eine oder die mehreren Klinken (70) umfasst, welche sich radial nach innen in eine Durchgangsbohrung (26c) des mittleren Abschnitts (26) des inneren Gehäuses (20) erstrecken,
wobei die eine oder die mehreren Klinken (70) dazu eingerichtet sind, sich in eine ringförmige Nut zu erstrecken, welche einen Halsabschnitt (35) des Hülsenhalters (34) bildet; und
wobei der eine oder die mehreren Klinken (70) als ein freitragendes Element eingerichtet sind, welches an einem ersten Ende an dem mittleren Abschnitt (26) angebracht ist und ein zweites freies Ende aufweist, um sich radial nach außen zu bewegen, auf eine Anwendung einer nach außen gerichteten Kraft hin, und um zu ihrer Position zurückzukehren, welche sich in die Durchgangsbohrung (26c) des mittleren Abschnitts (26) erstreckt, auf eine Entfernung der nach außen gerichteten Kraft hin.

6. Optischer Faser-Konnektor nach Anspruch 1, wobei die Klinken nach innen in Richtung einer Mittelachse des Zylinders vorgespannt sind; oder wobei die Klinken eine Schnapp-Passung und/oder eine Presspassung mit der Hülsengehäuse-Unteranordnung bereitstellen.

7. Optischer Faser-Konnektor nach einem der vorhergehenden Ansprüche, wobei die Ummantelung (80) ein Paar von Öffnungen an entgegengesetzten Seiten des ersten Endes (83) umfasst, wodurch Ausrichtabschnitte oder Finger (86) definiert sind.

8. Optischer Faser-Konnektor nach einem der vorhergehenden Ansprüche, wobei der mittlere Abschnitt der Ummantelung (80) eine Nut (81) umfasst, welche einen O-Ring aufnimmt.

## Revendications

1. Connecteur optique de fibre (10 ; 100) comprenant :
une portion en tube (25) qui inclut une lumière interne configurée pour recevoir un câble de fibre optique (30), la portion en tube (25) ayant une première extrémité et une seconde extrémité, dans lequel la seconde extrémité de la portion en tube (25) inclut une barbe (29) qui se projette vers l'extérieur depuis la seconde extrémité de la portion en tube (25) ;
un coffre (40), dans lequel la barbe (29) de la portion en tube (25) est configurée pour une fixation au coffre (40) ;
un ou plusieurs verrous (27) s'étendant depuis la première extrémité de la portion en tube (25) ; et
un sous-ensemble de logement de férule qui inclut un support de férule (34) qui est configuré pour recevoir une férule (33), dans lequel les verrous (27) s'engagent avec le support de férule (34) afin de fixer solidement la portion en tube (25) au sous-ensemble de logement de férule ;
un écrou d'accouplement (85) ; et
une coiffe (80) ayant une première extrémité (83) et une seconde extrémité (84), dans lequel la première extrémité (83) de la coiffe (80) inclut au moins une ouverture définie par la coiffe (80) et s'étend depuis une portion médiane de la coiffe (80) vers la première extrémité (83),
dans lequel la portion médiane de la coiffe (80) inclut un épaulement (82) qui fournit une butée pour l'écrou d'accouplement (85),
et dans lequel l'écrou d'accouplement (85) présente une voie de passage calibrée afin de s'ajuster sur la seconde extrémité (84) de la coiffe (80) et tourne autour de la portion médiane de la coiffe (80), dans lequel l'écrou d'accouplement (85) ne peut pas se déplacer au-delà de l'épaulement (82), mais l'écrou d'accouplement (85) est capable de tourner par rapport à la coiffe (80).

2. Connecteur optique de fibre selon la revendication 1, dans lequel la portion en tube (25) inclut une portion à diamètre réduit (25a).

3. Connecteur optique de fibre selon la revendication 1 ou 2, dans lequel le coffre (40) est disposé par-dessus et autour de la barbe (29), en particulier dans lequel le coffre (40) est un élément flexible qui permet à une interface entre le connecteur optique de fibre et un câble de fibre optique (30) de fléchir et de tourner.

4. Connecteur optique de fibre selon l'une quelconque des revendications précédentes, comprenant un logement interne (20) s'étendant depuis une première extrémité (21) vers une seconde extrémité (22) le long d'un axe longitudinal X et incluant la portion en tube (25), une section médiane (26), une portion de verrouillage (27), et une portion d'enveloppe de connecteur (28), et dans lequel la portion d'enveloppe de connecteur (28) se trouve au niveau de la première extrémité (21) du logement interne (20), la portion en tube (25) se trouve au niveau de la seconde extrémité (22) du logement interne (20), et la section médiane (26) et la portion de verrouillage (27) se trouvent entre la portion d'enveloppe de connecteur (28) et la portion en tube (25) dans le sens longitudinal.

5. Connecteur optique de fibre selon la revendication 4, dans lequel la portion de verrouillage (27), disposée éventuellement au niveau de la section médiane (26) du logement interne (20), inclut les un ou plusieurs verrous (70) qui s'étendent radialement vers l'intérieur à travers un trou traversant (26c) de la section médiane (26) du logement interne (20),
dans lequel le un ou plusieurs verrous (70) sont configurés pour s'étendre dans une rainure annulaire formant une portion en col (35) du support de férule (34) ; et
dans lequel le un ou plusieurs verrous (70) sont configurés sous la forme d'un élément en porte-à-faux fixé à une première extrémité de la section médiane (26) et ayant une seconde extrémité libre, pour se déplacer radialement vers l'extérieur lors de l'application d'une force extérieure et pour revenir à leur position s'étendant à l'intérieur du trou traversant (26c) de la section médiane (26) lors du retrait de la force extérieure.

6. Connecteur optique de fibre selon la revendication 1, dans lequel les verrous sont inclinés vers l'intérieur vers un axe central du cylindre ; ou dans lequel les verrous fournissent un ajustement par pression et/ou un ajustement par interférence avec le sous-ensemble de logement de férule.

7. Connecteur optique de fibre selon l'une quelconque des revendications précédentes, dans lequel la coiffe (80) inclut une paire d'ouvertures sur des côtés opposés de la première extrémité (83), définissant ainsi des portions ou des doigts d'alignement (86).

8. Connecteur optique de fibre selon l'une quelconque des revendications précédentes, dans lequel la portion médiane de la coiffe (80) inclut une rainure (81) logeant un joint torique.
